# EUROPÄISCHE PATENTSCHRIFT

(11) **EP 1 733 830 B1**
(45) Veröffentlichungstag und Bekanntmachung des Hinweises auf die Patenterteilung: **21.10.2009**
(21) Anmeldenummer: 06001776.1
(22) Anmeldetag: 28.01.2006
(51) Int. Cl.: B23B 31/12

(54) **Bohrfutter**
Drill chuck
Mandrin de perceuse

(30) Priorität: 15.06.2005 DE 102005027523
(43) Veröffentlichungstag der Anmeldung: 20.12.2006
(73) Patentinhaber: Röhm GmbH, 89567 Sontheim (DE)
(72) Erfinder: Mack, Hans-Dieter, 89567 Sontheim (DE)
(74) Vertreter: Hentrich, Swen

(56) Entgegenhaltungen:
- CH-A5- 567 897
- DE-A1- 1 810 614
- DE-A1- 3 305 733
- GB-A- 2 090 776

## Beschreibung

Die Erfindung betrifft ein Bohrfutter mit einem an eine Bohrspindel koppelbaren Futterkörper, der einen koaxial zum Futterkörper verdrehbaren Spannkonus aufweist, der axial auf einem am Futterkörper gelagerten Backenhalter abgestützt ist, in dem in Führungsschlitzen Spannbacken geführt sind, die radial verstellbar an einem Mitnehmer geführt und zum Spannen und Lösen durch eine Relativdrehung zwischen dem Futterkörper und dem Spannkonus mit dem Backenhalter verstellbar sind, wozu der Mitnehmer mit einem Mitnehmergewinde in ein koaxial zur Futterachse ausgebildetes Spindelgewinde einer Mitnehmeraufnahme des Futterkörpers eingreift.

Derartige als nachspannend bezeichnete Bohrfutter sind beispielsweise aus der DE 37 39 165 A1 bekannt. Diese Bohrfutter haben sich in der Praxis gut bewährt, insbesondere da mit diesen eine hohe Spannkraft erreicht werden kann. Als problematisch hat sich allerdings erwiesen, dass während des Bohrbetriebes in das Bohrfutter eindringender Bohrstaub sich dort ansammelt und insbesondere die Gängigkeit des Mitnehmergewindes in dem Spindelgewinde beeinträchtigen kann.

Ein nachspannendes Bohrfutter ist auch in der DE 33 05 733 A1 gezeigt, das zur Verhinderung des Eindringens von Bohrstaub einen elastischen Ring aufweist, der zwischen dem Futterkörper und der Spannhülse angeordnet und Staubaustrittsöffnungen zugeordnet ist.

Der Erfindung liegt daher die Aufgabe zugrunde, ein Bohrfutter der eingangs genannten Art so auszubilden, dass eine einfache Verstellbarkeit des Mitnehmergewindes in dem Spindelgewinde über die gesamte Lebensdauer des Bohrfutters gewährleistet ist.

Diese Aufgabe wird nach der Erfindung bei einem Bohrfutter der eingangs genannten Art dadurch gelöst, dass am Futterkörper dem Mitnehmer zugewandt eine Dichtungsscheibe angeordnet ist, die am axial vorderen Ende des Futterkörpers angeordnet ist und mit der Dichtungslippe in das Mitnehmergewinde eingreift.

Diese Dichtungsscheibe übt im wesentlichen zwei Funktionen aus, nämlich zum einen wird durch die Dichtungsscheibe das Eindringen von Bohrstaub in die das Spindelgewinde bereitstellende Mitnehmeraufnahme verhindert, zum anderen erfolgt eine permanente Reinigung des Mitnehmergewindes, die besonders effektiv ist, da die Dichtungsscheibe mit der Dichtungslippe in das Mitnehmergewinde eingreift.

Ein weiterer Vorteil lässt sich erzielen, wenn die Dichtungsscheibe aus einem elastischen, vorzugsweise gummiartigen Material besteht, da so beim Öffnen des Bohrfutters, insbesondere wenn dies motorisch mit dem Bohrspindelantrieb der Bohrmaschine erfolgt, die Spannbacken zusammen mit dem Mitnehmer axial nach hinten verstellt werden und einer Verklemmung des Mitnehmergewindes in dem Spindelgewinde infolge der von der Dichtungsscheibe ausgeübten Dämpfung entgegen gewirkt wird.

Diese Wirkung lässt sich verstärken, wenn auf der dem Futterkörper zugewandten Seite des Mitnehmers eine Dämpfungsscheibe angeordnet ist, die der Dichtungsscheibe anliegt in der maximal geöffneten Stellung Spannbacken, so dass diese maximal geöffnete Stellung der Spannbacken sich auch anbietet, um beispielsweise durch Erschütterungen des Bohrfutters in dieses eingedrungenen Bohrstaub wieder zu entfernen.

Ein Entfernen des in das Bohrfutter eingedrungenen Bohrstaubes wird dadurch erleichtert, dass in dem Backenhalter und dem Spannkonus miteinander fluchtende Entstaubungsöffnungen ausgebildet sind. Dabei bietet sich dann gemäß einer bevorzugten Ausführungsform an, dass die Dichtungsscheibe sich radial bis zum Spannkonus erstreckt, wobei zweckmäßigerweise auf der den Spannbacken zugewandten Seite der Dichtungsscheibe ein zu den Entstaubungsöffnungen weisender Leitsteg ausgebildet ist, der die Entstaubung des Bohrfutter unterstützt und insbesondere im Bohrbetrieb unter Ausnutzung der Wirkung der Fliehkraft den gezielten Transport des Bohrstaubes zu den Entstaubungsöffnungen ermöglicht.

Eine alternative Ausführungsform der Erfindung mit den Merkmalen des Oberbegriffs des Patentanspruchs 1 löst die Aufgabe, indem am Futterkörper dem Mitnehmer zugewandt eine Dichtungsscheibe angeordnet ist, die sich radial bis zum Spannkonus erstreckt, auf der den Spannbacken zugewandten Seite der Dichtungsscheibe ein zu den Entstaubungsöffnungen weisender Leitsteg zugeordnet ist, und der Dichtungsscheibe ein Balgentubus zugeordnet ist, der mit seinem axial vorderen, den Spannbacken zugewandten Seite am Mitnehmer fixiert ist. Dieser Balgentubus stellt eine vollständige Kapselung des Mitnehmers mit der Mitnehmeraufnahme dar, durch die das Eindringen von Bohrstaub in diesen Bereich vermieden wird. Auf dem Balgentubus abgelagerter Bohrstaub wird dabei durch die bei der Verstellung der Spannbacken erfolgende ziehharmonikaartige Bewegung von der Oberfläche des Balgentubus gelöst, wodurch ein einfacherer Transport nach aussen, insbesodere durch die Entstaubungsöffnungen möglich ist.

Für eine dauerhafte, der Lebensdauer des Bohrfutters angepasste Fixierung des Balgentubus am Mitnehmer ist vorgesehen, dass der Balgentubus an seinem dem Mitnehmer zugeordneten Ende einen Ringwulst aufweist, der in eine am Mitnehmer axial vor dem Mitnehmergewinde ausgebildete Ringnut eingreift.

Im folgenden wird die Erfindung an in der Zeichnung dargestellten Ausführungsbeispielen näher erläutert; es zeigen:
- Fig. 1: ein Bohrfutter nach der Erfindung, links in einem Axialschnitt, rechts in einer Seitenansicht dargestellt,
- Fig. 2: eine der Fig. 1 entsprechende Darstellung einer alternativen Ausführungsform,
- Fig. 3: eine der Fig. 1 entsprechende Darstellung einer weiteren alternativen Ausführungsform mit einem Balgentubus, gezeigt in der gestreckten Konfiguration in der zu einem kleinen Spanndurchmesser gehörenden Spannstellung der Spannbacken,
- Fig. 4: eine Darstellung des Bohrfutters aus Fig. 3 in der komprimierten Konfiguration des Balgentubus, gehörend zu der zu einem großen Spanndurchmesser entsprechenden Stellung der Spannbacken,
- Fig. 5: eine weitere Ausführungsform mit den in dem Backenhalter und dem Spannkonus ausgebildeten Entstaubungsöffnungen, und
- Fig. 6: eine der Fig. 5 entsprechende Darstellung mit der einem großen Spanndurchmesser entsprechenden Stellung der Spannbacken.

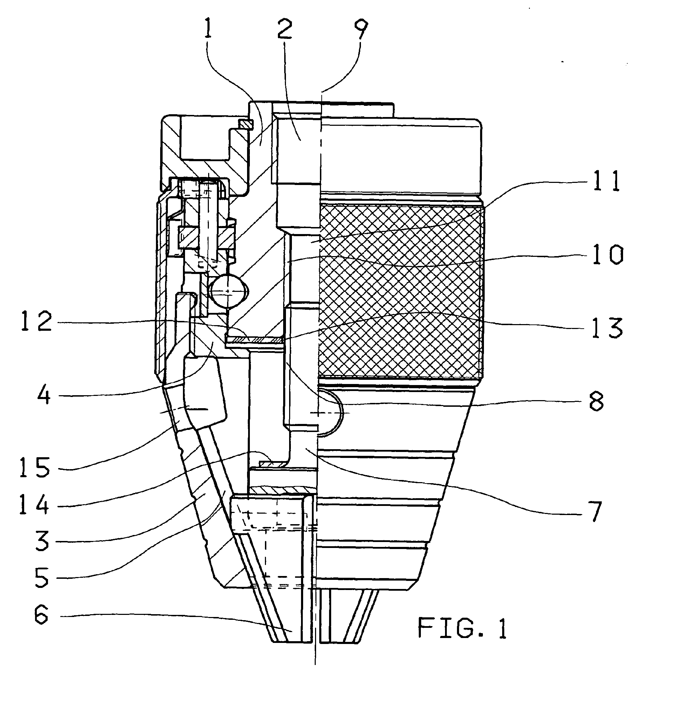

In der Zeichnung sind Ausführungsformen sogenannter nachspannender Bohrfutter gezeigt, die einen eine Spindelaufnahme 2 aufweisenden Futterkörper 1 umfassen, der einen koaxial zum Futterkörper 1 verdrehbaren Spannkonus 3 aufweist. Der Spannkonus 3 ist axial auf einem am Futterkörper 1 gelagerten Backenhalter 4 abgestützt, in dem in Führungsschlitzen 5 Spannbacken 6 geführt sind, die weiterhin radial verstellbar an einem Mitnehmer 7 geführt und zum Spannen und Lösen durch eine Relativdrehung zwischen dem Futterkörper 1 und dem Spannkonus 3 mit dem Backenhalter 4 verstellbar sind. Dazu greift der Mitnehmer 7 mit einem Mitnehmergewinde 8 in ein koaxial zur Futterachse 9 ausgebildetes Spindelgewinde 10 einer Mitnehmeraufnahme 11 des Futterkörpers 1 ein. Am axial vorderen Ende des Futterkörpers 1, also dem Mitnehmer 7 zugewandt, ist eine Dichtungsscheibe 12 angeordnet, die bei dem in der Fig. 1 gezeigten Ausführungsbeispiel mit einer Dichtungslippe 13 in das Mitnehmergewinde 8 eingreift. Die Dichtungsscheibe 12 besteht aus einem elastischen, vorzugsweise gummiartigen Material und übt somit auch eine Dämpfungsfunktion aus, wenn der Mitnehmer 7 bei der Verstellung der Spannbacken 6 in die axial rückwärtige Extremposition auf den Futterköper 1 trifft. Zur Verstärkung der Dämpfungswirkung ist auf der dem Futterkörper 1 zugewandten Seite des Mitnehmers 7 eine Dämpfungsscheibe 14 angeordnet.

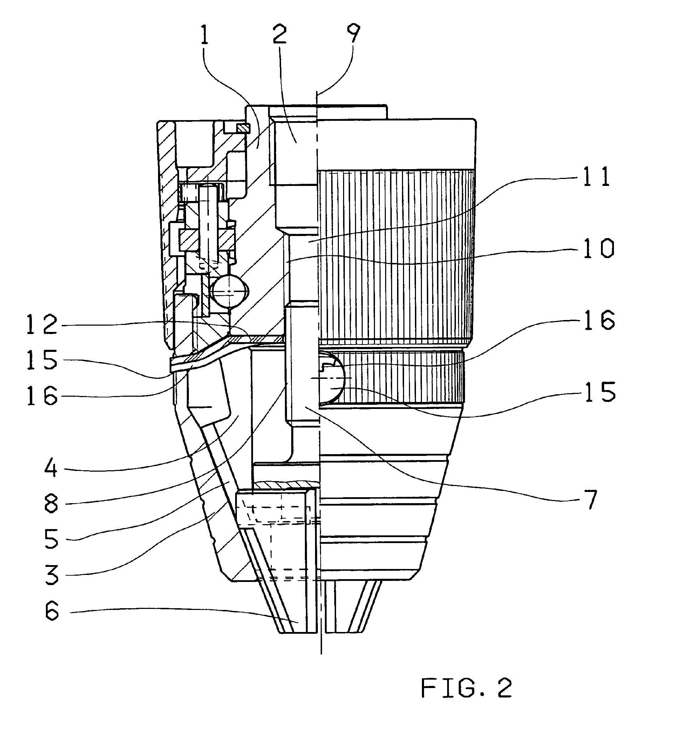

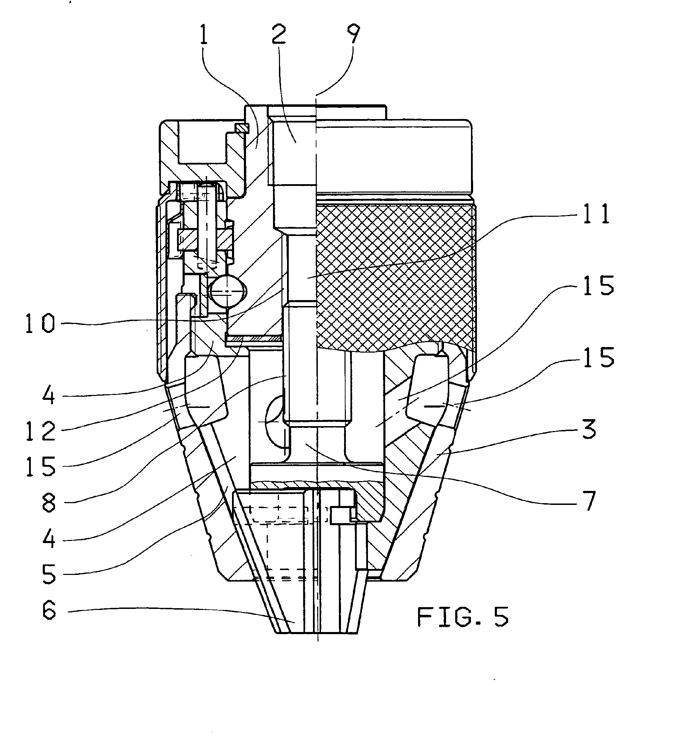

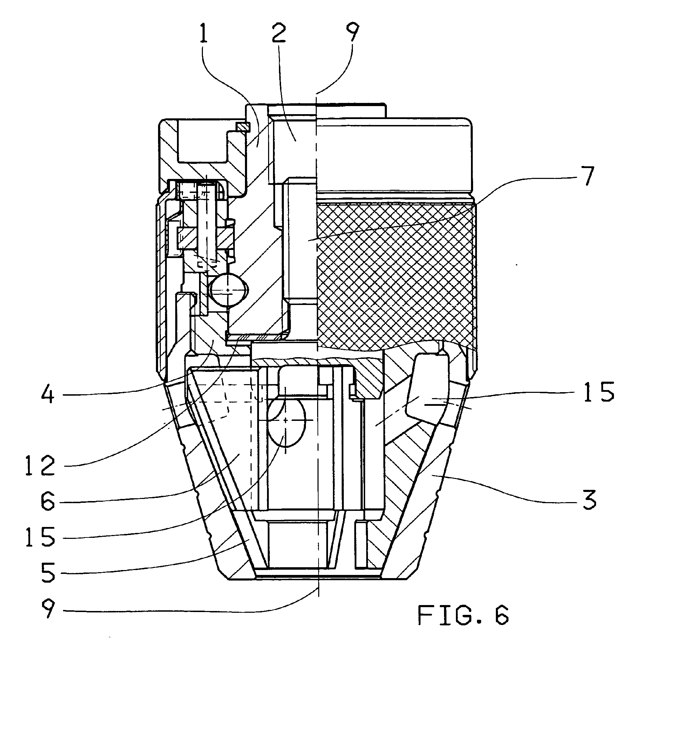

Fig. 1, insbesondere aber die Fig. 5 und 6 lassen erkennen, dass in dem Backenhalter 4 und dem Spannkonus 3 miteinander fluchtende Entstaubungsöffnungen 15 aufgebildet sind, die ein einfacheres Entfernen von in das Bohrfutter eingedrungenen Bohrstaub ermöglichen. Zugleich bewirken die Entstaubungsöffnungen 15 auch eine Materialeinsparung von dem Backenhalter 4 und dem Spannkonus 3, so dass deren Gewicht und damit das Gewicht des Bohrfutters insgesamt reduziert ist. Um eine gezielte Ableitung von in das Bohrfutter eingedrungenen Bohrstaub zu ermöglichen, erstreckt die Dichtungsscheibe 12 sich radial bis zum Spannkonus 3 und weist auf der den Spannbacken 6 zugewandten Seite mindestens einen, bei dem in der Zeichnung (Fig. 2) dargestellten Ausführungsbeispiel mehrere Leitstege 16 auf, die zu den Entstaubungsöffnungen 15 führen.

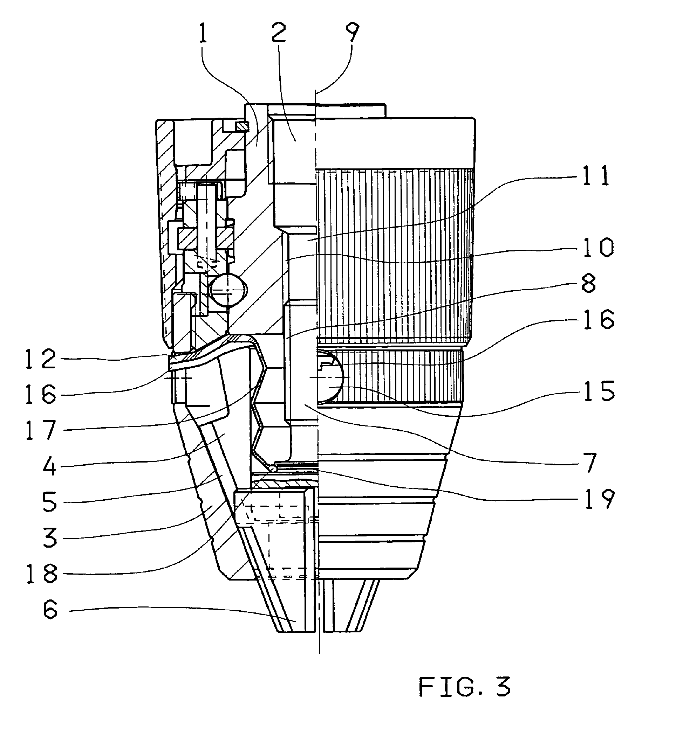

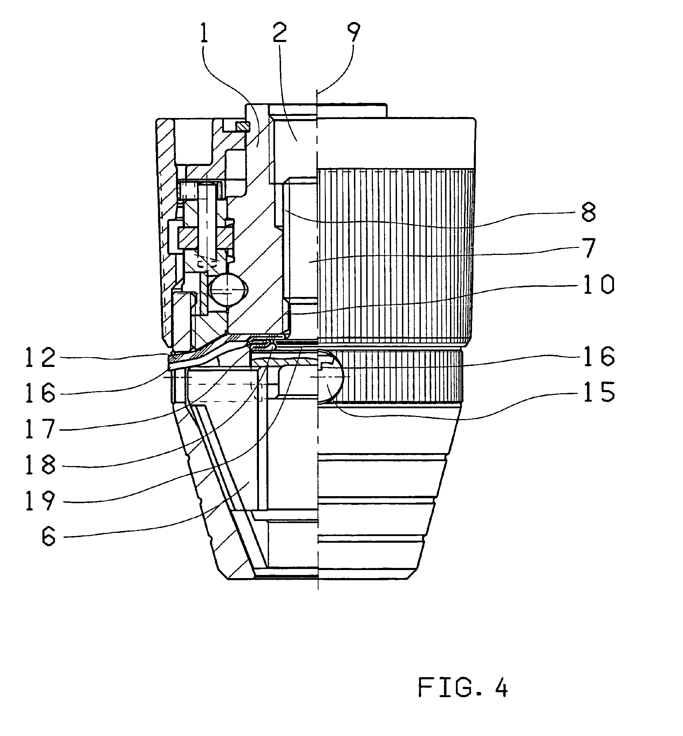

Die Fig. 3 und 4 zeigen eine hinsichtlich ihrer Schutzwirkung gegen Bohrstaub weiter verbesserte Ausführungsform, bei der der Dichtungsscheibe 12 ein Balgentubus 17 zugeordnet ist, der mit seinem axial vorderen, den Spannbacken 6 zugewandten Ende am Mitnehmer 7 fixiert ist und so eine vollständige Kapselung des Mitnehmers 7 und der Mitnehmeraufnahme 11 bewirkt. Fig. 3 lässt dabei erkennen, dass der Balgentubus 17 an seinem dem Mitnehmer 7 zugeordneten Ende einen Ringwulst 18 aufweist, der in eine am Mitnehmer 7 axial vor dem Mitnehmergewinde 8 ausgebildete Ringnut 19 eingreift.

## Patentansprüche

1. Bohrfutter mit einem an eine Bohrspindel koppelbaren Futterkörper (1), der einen koaxial zum Futterkörper (1) verdrehbaren Spannkonus (3) aufweist, der axial auf einem am Futterkörper (1) gelagerten Backenhalter (4) abgestützt ist, in dem in Führungsschlitzen (5) Spannbacken (6) geführt sind, die radial verstellbar an einem Mitnehmer (7) geführt und zum Spannen und Lösen durch eine Relativdrehung zwischen dem Futterkörper (1) und dem Spannkonus (3) mit dem Backenhalter (4) verstellbar sind, wozu der Mitnehmer (7) mit einem Mitnehmergewinde (8) in ein koaxial zur Futterachse (9) ausgebildetes Spindelgewinde (10) einer Mitnehmeraufnahme (11) des Futterkörpers (1) eingreift, **dadurch gekennzeichnet, dass** am Futterkörper (1) dem Mitnehmer (7) zugewandt eine Dichtungsscheibe (12) angeordnet ist, die am axial vorderen Ende des Futterkörpers (1) angeordnet ist und mit einer Dichtungslippe (13) in das Mitnehmergewinde eingreift.

2. Bohrfutter nach Anspruch 1, **dadurch gekennzeichnet, dass** die Dichtungsscheibe (12) aus einem elastischen, vorzugsweise gummiartigen Material besteht.

3. Bohrfutter nach Anspruch 1 oder 2, **dadurch gekennzeichnet, dass** auf der dem Futterkörper (1) zugewandten Seite des Mitnehmers (7) eine Dämpfungsscheibe (14) angeordnet ist.

4. Bohrfutter nach einem der Ansprüche 1 bis 3, **dadurch gekennzeichnet, dass** in dem Backenhalter (4) und dem Spannkonus (3) miteinander fluchtende Entstaubungsöffnungen (15) ausgebildet sind.

5. Bohrfutter nach einem der Ansprüche 1 bis 4, **dadurch gekennzeichnet, dass** die Dichtungsscheibe (12) sich radial bis zum Spannkonus (3) erstreckt.

6. Bohrfutter nach Anspruch 4 oder 5, **dadurch gekennzeichnet, dass** auf der den Spannbacken (6) zugewandten Seite der Dichtungsscheibe (12) ein zu den Entstaubungsöffnungen (15) weisender Leitsteg (16) zugeordnet ist.

7. Bohrfutter mit einem an eine Bohrspindel koppelbaren Futterkörper (1), der einen koaxial zum Futterkörper (1) verdrehbaren Spannkonus (3) aufweist, der axial auf einem am Futterkörper (1) gelagerten Backenhalter (4) abgestützt ist, in dem in Führungsschlitzen (5) Spannbacken (6) geführt sind, die radial verstellbar an einem Mitnehmer (7) geführt und zum Spannen und Lösen durch eine Relativdrehung zwischen dem Futterkörper (1) und dem Spannkonus (3) mit dem Backenhalter (4) verstellbar sind, wozu der Mitnehmer (7) mit einem Mitnehmergewinde (8) in ein koaxial zur Futterachse (9) ausgebildetes Spindelgewinde (10) einer Mitnehmeraufnahme (11) des Futterkörpers (1) eingreift, **dadurch gekennzeichnet, dass** am Futterkörper (1) dem Mitnehmer (7) zugewandt eine Dichtungsscheibe (12) angeordnet ist, die Dichtungsscheibe (12) sich radial bis zum Spannkonus (3) erstreckt, dass auf der den Spannbacken (6) zugewandten Seite der Dichtungsscheibe (12) ein zu den Entstäubungsöffnungen (15) weisender Leitsteg (16) zugeordnet ist, und dass der Dichtungsscheibe (12) ein Balgentubus (17) zugeordnet ist, der mit seinem axial vorderen, den Spannbacken (6) zugewandten Seite am Mitnehmer (7) fixiert ist.

8. Bohrfutter nach Anspruch 7, **dadurch gekennzeichnet, dass** der Balgentubus (17) an seinem dem Mitnehmer (7) zugeordneten Ende einen Ringwulst (18) aufweist, der in eine am Mitnehmer (7) axial vor dem Mitnehmergewinde (8) ausgebildete Ringnut (19) eingreift.

## Claims

1. A drill chuck having a chuck body (1) which can be coupled to a drilling spindle and has a clamping cone (3) which is rotatable coaxially relative to the chuck body (1) and is supported axially on a jaw holder (4) which is mounted to the chuck body (1) and in which there are guided in guide slots (5) clamping jaws (6) which are guided radially displaceably on an entrainment member (7) and are displaceable for tightening and releasing by a relative rotary movement between the chuck body (1) and the clamping cone (3) with the jaw holder (4), for which purpose the entrainment member (7) engages with an entrainment member screwthread (8) into a spindle screwthread (10), provided coaxially relative to the chuck axis (9), of an entrainment member receiving means (11) of the chuck body (1), **characterised in that** arranged on the chuck body (1) towards the entrainment member (7) is a sealing disc (12) which is arranged at the axially forward end of the chuck body (1) and engages with a sealing lip (13) into the entrainment member screwthread.

2. A drill chuck according to claim 1 **characterised in that** the sealing disc (12) comprises an elastic, preferably rubber-like material.

3. A drill chuck according to claim 1 or claim 2 **characterised in that** a damping disc (14) is arranged on the side of the entrainment member (7), that is towards the chuck body (1).

4. A drill chuck according to one of claims 1 to 3 **characterised in that** mutually aligned dust removal openings (15) are provided in the jaw holder (4) and the clamping cone (3).

5. A drill chuck according to one of claims 1 to 4 **characterised in that** the sealing disc (12) extends radially to the clamping cone (3).

6. A drill chuck according to claim 4 or claim 5 **characterised in that** a guide limb (16) facing towards the dust removal openings (15) is associated with the sealing disc (12) on the side towards the clamping jaws (6).

7. A drill chuck having a chuck body (1) which can be coupled to a drilling spindle and has a clamping cone (3) which is rotatable coaxially relative to the chuck body (1) and is supported axially on a jaw holder (4) which is mounted to the chuck body (1) and in which there are guided in guide slots (5) clamping jaws (6) which are guided radially displaceably on an entrainment member (7) and are displaceable for tightening and releasing by a relative rotary movement between the chuck body (1) and the clamping cone (3) with the jaw holder (4), for which purpose the entrainment member (7) engages with an entrainment member screwthread (8) into a spindle screwthread (10), provided coaxially relative to the chuck axis (9), of an entrainment member receiving means (11) of the chuck body (1), **characterised in that** arranged on the chuck body (1) towards the entrainment member (7) is a sealing disc (12), the sealing disc (12) extends radially to the clamping cone (3), a guide limb (16) facing towards the dust removal openings (15) is associated with the sealing disc (12) on the side towards the clamping jaws (6), and associated with the sealing disc (12) is a concertina tube (17) which is fixed with its axially forward side that is towards the clamping jaws (6) to the entrainment member (7).

8. A drill chuck according to claim 7 **characterised in that** at its end associated with the entrainment member (7) the concertina tube (17) has an annular ridge (18) engaging into an annular groove (19) provided on the entrainment member (7) axially in front of the entrainment member screwthread (8).

## Revendications

1. Mandrin de perçage comprenant un corps de mandrin (1) qui est apte à être accouplé à une broche de perçage et qui comporte un cône de serrage (3), lequel peut tourner coaxialement au corps de mandrin (1) et prend appui axialement sur un porte-mâchoires (4) qui est monté sur le corps de mandrin (1) et dans lequel sont guidées, dans des rainures de guidage (5), des mâchoires de serrage (6) qui sont guidées avec une possibilité de déplacement radial sur un moyen d'entraînement (7) et qui, pour le serrage et le desserrage, sont déplaçables par rotation relative entre le corps de mandrin (1) et le cône de serrage (3) avec le porte-mâchoires (4), le moyen d'entraînement (7) pénétrant à cet effet par l'intermédiaire d'un filet d'entraînement (8) dans un filet de broche (10), conformé coaxialement à l'axe de mandrin (9), d'un logement d'entraînement (11) du corps de mandrin (1), **caractérisé en ce que** sur le corps de mandrin (1) est disposée une rondelle d'étanchéité (12) qui est tournée vers le moyen d'entraînement (7), qui est disposée à l'extrémité avant axiale du corps de mandrin (1) et qui pénètre dans le filet d'entraînement par l'intermédiaire d'une lèvre d'étanchéité (13).

2. Mandrin de perçage selon la revendication 1, **caractérisé en ce que** la rondelle d'étanchéité (12) est réalisée en matière élastique, de préférence caoutchouteuse.

3. Mandrin de perçage selon la revendication 1 ou 2, **caractérisé en ce qu'**une rondelle d'amortissement (14) est disposée sur le côté du moyen d'entraînement (7) tourné vers le corps de mandrin (1).

4. Mandrin de perçage selon une des revendications 1 à 3, **caractérisé en ce que** dans le porte-mâchoires (4) et le cône de serrage (3) sont ménagées des ouvertures de dépoussiérage (15) qui coïncident les unes avec les autres.

5. Mandrin de perçage selon une des revendications 1 à 4, **caractérisé en ce que** la rondelle d'étanchéité (12) s'étend radialement jusqu'au cône de serrage (3).

6. Mandrin de perçage selon la revendication 4 ou 5, **caractérisé en ce qu'**une barrette de guidage (16) tournée vers les ouvertures de dépoussiérage (15) est associée au côté de la rondelle d'étanchéité (12) tourné vers les mâchoires de serrage (6).

7. Mandrin de perçage comprenant un corps de mandrin (1) qui est apte à être accouplé à une broche de perçage et qui comporte un cône de serrage (3), lequel peut tourner coaxialement au corps de mandrin (1) et prend appui axialement sur un porte-mâchoires (4) qui est monté sur le corps de mandrin (1) et dans lequel sont guidées, dans des rainures de guidage (5), des mâchoires de serrage (6) qui sont guidées avec une possibilité de déplacement radial sur un moyen d'entraînement (7) et qui, pour le serrage et le desserrage, sont déplaçables par rotation relative entre le corps de mandrin (1) et le cône de serrage (3) avec le porte-mâchoires (4), le moyen d'entraînement (7) pénétrant à cet effet par l'intermédiaire d'un filet d'entraînement (8) dans un filet de broche (10), conformé coaxialement à l'axe de mandrin (9), d'un logement d'entraînement (11) du corps de mandrin (1), **caractérisé en ce que** sur le corps de mandrin (1) est disposée une rondelle d'étanchéité (12) qui est tournée vers le moyen d'entraînement (7), la rondelle d'étanchéité s'étend radialement jusqu'au cône de serrage (3), **en ce qu'**une barrette de guidage (16) tournée vers les ouvertures de dépoussiérage (15) est associée au côté de la rondelle d'étanchéité (12) tourné vers les mâchoires de serrage (6), et **en ce qu'**à la rondelle d'étanchéité (12) est associé un tube-soufflet (17) qui est fixé au moyen d'entraînement (7) par son côté avant axial tourné vers les mâchoires de serrage (6).

8. Mandrin de perçage selon la revendication 7, **caractérisé en ce que** le tube-soufflet (17) comporte, à son extrémité associée au moyen d'entraînement (7), un bourrelet annulaire (18) qui pénètre dans une gorge annulaire (19) ménagée axialement dans le moyen d'entraînement (7) avant le filet d'entraînement (8).
